# EUROPÄISCHE PATENTSCHRIFT

(11) **EP 1 146 269 B1**
(45) Veröffentlichungstag und Bekanntmachung des Hinweises auf die Patenterteilung: **13.12.2006**
(21) Anmeldenummer: 01109202.0
(22) Anmeldetag: 12.04.2001
(51) Int. Cl.: F16K 37/00, F16K 5/06

(54) **Messgerätinstallation an einer Hochdruck-Prozessleitung und Verfahren zur Dichtheitsprüfung**
Measuring installation for a high pressure process pipeline and method of leak detection
Dispositif de mesure pour des conduites de processus à haute pression et méthode pour détecter des fuites

(30) Priorität: 15.04.2000 DE 10018817
(43) Veröffentlichungstag der Anmeldung: 17.10.2001
(73) Patentinhaber: Hess, Martin, 85051 Ingolstadt (DE)
(72) Erfinder: Hess, Martin, 85051 Ingolstadt (DE)
(74) Vertreter: Liebl, Thomas

(56) Entgegenhaltungen:
- WO-A-98/52400
- US-A- 3 209 779
- US-A- 4 575 045
- US-A- 5 533 549

## Beschreibung

Die Erfindung betrifft eine Messgeräteinstallation mit einer mit einem unter Hochdruck stehenden Medium beaufschlagbaren Prozessleitung nach dem Oberbegriff des Anspruchs 1.

Vorrangig werden hier Messgeräteinstallationen betrachtet bei Prozessen mit gasförmigen oder flüssigen Prozessmedien, die betriebsmäßig unter hohen Drücken stehen. Zudem sind die Ausführungen auf Prozesse gerichtet, bei denen beispielsweise in der Kryogentechnik bei Flüssig/Gas-Übergängen hohe Drücke aufgebaut werden.

Eine Messgeräteinstallation an einer Hochdruck-Prozessleitung wird allgemein so durchgeführt, dass zwischen der Prozessleitung und dem Messgerät, insbesondere einem Messgerät als Drucktransmitter ein betätigbares Absperrorgan angeordnet ist.

Aus Gründen der Sicherheit, insbesondere für den Abbau eines Messgeräts oder eines Drucktransmitters bei druckbeaufschlagter Prozessleitung ist es allgemein bekannt, ein solches Absperrorgan mittels drei Ventilen in einer sogenannten "double-block and bleed"-Anordnung aufzubauen. Dazu wird ein prozessleitungsseitiges Ventil verwendet, dessen Dichtsitz durch den prozessleitungsseitig anstehenden Druck in Schließrichtung verstärkt wird. Weiter wird ein messgeräteseitiges Ventil in umgekehrter Richtung eingebaut, so dass der im Messgerät bzw. Drucktransmitter anstehende Druck diesen Ventilsitz in Dichtrichtung verstärkt. Diese beiden Ventile stellen die "double-block"-Anordnung dar. Zwischen diesen beiden Ventilen ist in einer T-Anordnung ein drittes Ventil als Entlastungs-/Entleerungsventil in der "bleed"-Funktion angeordnet. Vor einem Abbau eines Messgeräts bzw. eines Drucktransmitters werden die beiden erstgenannten Ventile geschlossen und anschließend mittels des Entlastungs-/Entleerungsventils die Leitung zwischen diesen Ventilen entlastet, so dass eine sichere Entkopplung der bei einem Messgeräteabbau zu öffnenden Leitung von der Hochdruck-Prozessleitung sichergestellt ist.

Beispielsweise ist aus der gattungsbildenden WO 98/52400 ein Ventil für eine Messgeräteinstallation mit einem Absperrorgan zwischen dem Messgerät und einer Prozessleitung bekannt, wobei das Absperrorgan ein Kugelhahn mit einem Ventilkörper als Kugelgehäuse ist, das einen Prozessleitungs-Anschluss und einen Messgerät-Anschluss aufweist, wobei im Kugelgehäuse eine zwischen einer Durchgangsposition und einer Absperrposition verdrehbare Kugel angeordnet, die eine in die Durchgangsposition stellbare Durchgangsbohrung enthält und wobei zwei jeweils in Richtung des Prozessleitungs-Anschlusses und des Messgerät-Anschlusses liegende Kugelsitze vorgesehen sind. Konkret weist das Ventil hier zwei Kugelventilbaugruppen auf, die jeweils eine Kugel aufweisen und so ausgebildet sind, dass diese unabhängig voneinander zwischen einer offenen und einer geschlossenen Position betätig werden können, um einen Fluidstrom durch das Ventil zu leiten, wenn sich beide Kugelventile im offenen Zustand befinden. Zwischen den beiden Kugeln ist eine Haltekomponente mit Durchbruch vorgesehen, die arretierend in jede der Baugruppen eingeschraubt werden kann, um das jeweilige Kugelventil und die diesen zugeordneten Dichtungen in jeder Baugruppe zu arretieren. Dazu sind die Haltekomponenten mit einem Gewinde versehen, das in ein entsprechendes Gegengewinde des Ventilkörpers eingeschraubt ist. Durch die Schraubgewinde wird dabei eine Selbsthemmung dieses Aufbaus bewirkt. Auch zwischen den jeweiligen Kugeln und den Haltekomponenten kann eine Dichtung eingepresst sein. Ferner ist eine Lüftungsbaugruppe vorgesehen, die einen integralen Bestandteil einer der Kugelventilbaugruppen bildet oder zwischen den beiden Kugelventilbaugruppen angeordnet ist.

Eine solche Anordnung ist ersichtlich aufwendig zu installieren und erfordert relativ viel Platz.

Weiter ist als Absperrventil ein Kugelhahn allgemein bekannt mit einem Ventilkörper als Kugelgehäuse, mit einem Prozessleitungs-Anschluss und einem Messgerät-Anschluss, sowie mit einer zwischen einer Durchgangsposition und einer Absperrposition verdrehbaren Kugel im Kugelgehäuse. Die Kugel liegt zwischen zwei Kugelsitzen mit je einer auf die Kugel federvorgespannt und abgedichtet verschiebbaren Schiebehülse mit jeweils einer an der Kugel ringförmig anliegenden Dichtungspackung. Dadurch ist zwischen den Dichtungspackungen ein gegenüber dem Prozessleitungs-Anschluss und dem Messgerät-Anschluss nicht unmittelbar abgedichteter Kugelraum gebildet. Eine solche Kugelsitzanordnung mit zwei federbelasteten Kugelsitzen bzw. Schiebehülsen mit Dichtungspackungen ergibt in bekannter Weise eine weitgehend leckfreie Abdichtung, insbesondere bei Druck- und Temperaturschwankungen. Durch die Federbeaufschlagung wird eine Kugel- und Sitzabnutzung, insbesondere bei Druckschwankungen und bei Druckstößen reduziert.

Zudem ist es bekannt, die Kugel mit einer Kugelbohrung zu versehen, die bei geschlossenem Kugelhahn eine Verbindung des Kugelraums zur Prozessseite herstellt, wodurch ein Druckausgleich, insbesondere für Prozessmedien mit großer Volumenausdehnung geschaffen wird.

Aufgabe der Erfindung ist es, eine Messgeräteinstallation so auszubilden, dass unter Beibehaltung der "double-block and bleed"-Funktion eine wesentlich einfachere, kostengünstigere und raumsparendere Anordnung möglich wird.

Diese Aufgabe wird hinsichtlich der Messgeräteinstallation mit den Merkmalen des Anspruchs 1 gelöst.

Nach Anspruch 1 ist das Absperrorgan ein Kugelhahn mit einem Ventilkörper als Kugelgehäuse, mit einem Prozessleitungs-Anschluss und einem Messgerät-Anschluss, sowie mit einer zwischen einer Durchgangsposition und einer Absperrposition verdrehbaren Kugel im Kugelgehäuse, die eine in die Durchgangsposition stellbare Durchgangsbohrung enthält. Zudem sind zwei jeweils in Richtung des Prozessleitungs-Anschlusses und des Messgerät-Anschlusses liegende Kugelsitze vorgesehen, die je eine auf die Kugel federvorgespannte und abgedichtet verschiebbare Schiebehülse aufweisen mit einer an der Kugel ringförmig anliegenden Dichtungspackung. Dadurch ist zwischen den Dichtungspackungen ein nicht unmittelbar gegenüber den Hochdruckbereichen abgedichteter Kugelraum gebildet, wobei jedoch Medium unter Hochdruck durch Leckagen an den beiden Dichtsitzen, sowie beim Absperrvorgang in diesen Kugelraum gelangen kann.

Das Kugelgehäuse ist zudem im Bereich dieses Kugelraums mit einem Durchgang zur Umgebung als Entlastungs-/Entleerungsanschluss versehen, an den ein betätigbares Entlastungs-/Entleerungsventil angeschlossen ist.

Die beiden federbeaufschlagten Kugelsitze können als zwei unabhängig voneinander wirkende Absperrorgane im Sinne der eingangs erwähnten "double-block"-Funktion gesehen werden, da sie jeweils prozessleitungsseitig und messgeräteseitig in der geschlossenen Stellung die entsprechenden Anschlüsse gegenüber der Kugel und dem dazwischen liegenden Kugelraum abdichten.

Der Kugelraum zwischen diesen in einer "double-block"-Funktion wirkenden Kugelsitze wird nun erfindungsgemäß über ein Entlastungs-/Entleerungsventil mit der Umgebung verbindbar, wodurch die "bleed"-Funktion zur Entlastung und/oder Entleerung möglich ist.

Insgesamt wird somit in vorteilhafter Weise in einer sehr kompakten, kostengünstigen und sicherheitstechnisch voll wirksamen Lösung eine "double-block and bleed"-Funktion geschaffen.

Die mit den Merkmalen der Ansprüche 2 bis 7 beanspruchten Messgeräteinstallationen stellen konstruktiv vorteilhafte und funktionstüchtige Varianten dar:

Mit Anspruch 2 wird als Entlastungs-/Entleerungsventil ein einschraubbares Nadelventil vorgeschlagen, mit dem eine Entlastung und/oder Dichtheitsprüfung sehr dosiert durchführbar ist.

Die Abdichtung der Schiebehülsen wird nach Anspruch 3 einfach über O-Ringe durchgeführt, wobei die Federvorspannung der Schiebehülsen nach Anspruch 4 zweckmäßig mittels Tellerfedern hergestellt ist.

Mit Anspruch 5 ist die erfindungsgemäße Lösung im Zusammenhang mit einem Kugelhahn mit geradem Leitungsdurchgang beansprucht, wodurch die erforderlichen geometrischen Gegebenheiten günstig sind. Grundsätzlich ist jedoch auch ein Ventil mit nicht geradem Durchgang beispielsweise ein Eckventil erfindungsgemäß einsetzbar.

Nach Anspruch 6 kann ein Kugelhahn mit üblicher Vierkantbetätigung verwendet werden.

Mit den Merkmalen des Anspruchs 7 wird eine einfache Montage eines Kugelhahns möglich.

Anhand einer Zeichnung wird die Erfindung näher erläutert:

Es zeigen:
- Fig. 1: einen schematischen Querschnitt durch einen Kugelhahn mit einem als Ventilkörper ausgebildeten Kugelgehäuse sowie mit einem Prozessleitungs-Anschluss und einem Messgerät-Anschluss,
- Fig. 2: eine schematische Schnittdarstellung des Kugelhahns mit einem Entlüftungs-/Entleerungsventil, und
- Fig. 3: eine schematische Draufsicht auf den Kugelhahn mitsamt Prozessleitungs-Anschluss und Messgerät-Anschluss nach Fig. 1.

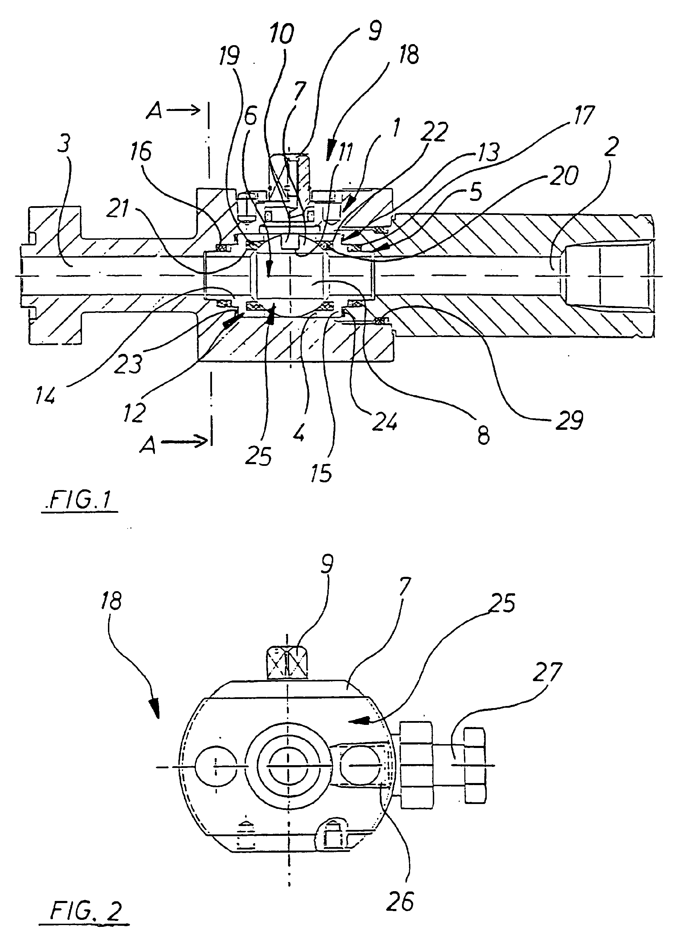

In Fig. 1 ist schematisch ein Querschnitt durch einen Kugelhahn 18 mit einem als Ventilkörper ausgebildeten Kugelgehäuse 1 gezeigt, das einen Prozessleitungs-Anschluss 2 sowie einen Messgerät-Anschluss 3 aufweist.

Wie dies aus Fig. 1 weiter ersichtlich ist, weist das Kugelgehäuse 1 einen dem Prozessleitungs-Anschluss 2 zugewandten Kugelaufnahmeraum 4 mit einer Aufnahmeöffnung 5 auf, über die eine verdrehbare Kugel 7 in das Kugelgehäuse 1 einsetzbar ist.

An dem der Aufnahmeöffnung 5 gegenüberliegenden Ende schließt sich am Kugelgehäuse 1 der Messgerät-Anschluss 3 in Form eines Anschlussstutzens an. Dieser Messgerät-Anschluss 3 kann, was hier allerdings nicht dargestellt ist, mit einem Messgerät, z. B. einem Drucktransmitter, verbunden werden. Wie dies aus Fig. 1 weiter ersichtlich ist, weist der Messgerät-Anschluss 3 zudem einen kleineren Durchmesser als die Aufnahmeöffnung 5 auf.

Aus Fig. 1 ist weiter ersichtlich, dass die Kugel 7 eine Durchgangsbohrung 8 aufweist, die in einer in Fig. 1 dargestellten Durchgangsposition 6 eine Verbindung zwischen dem Messgerät-Anschluss 3 und dem Prozessleitungs-Anschluss 2 herstellt. Die Verdrehung der Kugel 7 wird dabei mittels eines Vierkants 9 durchgeführt, der mit einem dicht in den Kugelaufnahmeraum 4 geführten Wellenende 10 in eine Ausnehmung 11 an der Kugel 7 drehbewegungsübertragend eingreifen kann.

Ferner sind zwei jeweils in Richtung des Prozessleitungs-Anschlusses 2 und des Messgerät-Anschlusses 3 liegende Kugelsitze 12, 13 vorgesehen, die je eine auf die Kugel 7 über Tellerfedern 23, 24, die hier lediglich äußerst schematisch dargestellt sind, federvorgespannte und verschiebbare Schiebehülse 14, 15 aufweisen, die zum Prozessleitungs-Anschluss 2 und zum Messgerät-Anschluss 3 hin jeweils mit einer O-Ring-Dichtung 16, 17 abgedichtet sind.

Die Abdichtung zwischen der Kugel 7 und den Schiebehülsen 14, 15 erfolgt über jeweils eine an der Kugel 7 ringförmig anliegende Dichtungspackung 19, 20, die in einer entsprechenden Nut 21, 22 in der Schiebehülse 14, 15 aufgenommen sind.

Wie dies aus Fig. 1 weiter ersichtlich ist, sind die Dichtungspackungen 19, 20 hier so angeordnet, dass zwischen ihnen ein gegenüber dem Prozessleitungs-Anschluss 2 und dem Messgerät-Anschluss 3 nicht unmittelbar abgedichteter Kugelraum 25 ausgebildet ist, wobei das Kugelgehäuse 1 im Bereich dieses Kugelraums 25 einen als Gewindebohrung ausgebildeten Entlastungs-/Entleerungsanschluss 26 mit einem als Nadelventil ausgebildetem Entlastungs-/Enteerungsventil 27 aufweist, was insbesondere aus der Fig. 2 ersichtlich ist, die eine lediglich äußerst schematische Querschnittdarstellung der Fig. 1 zeigt.

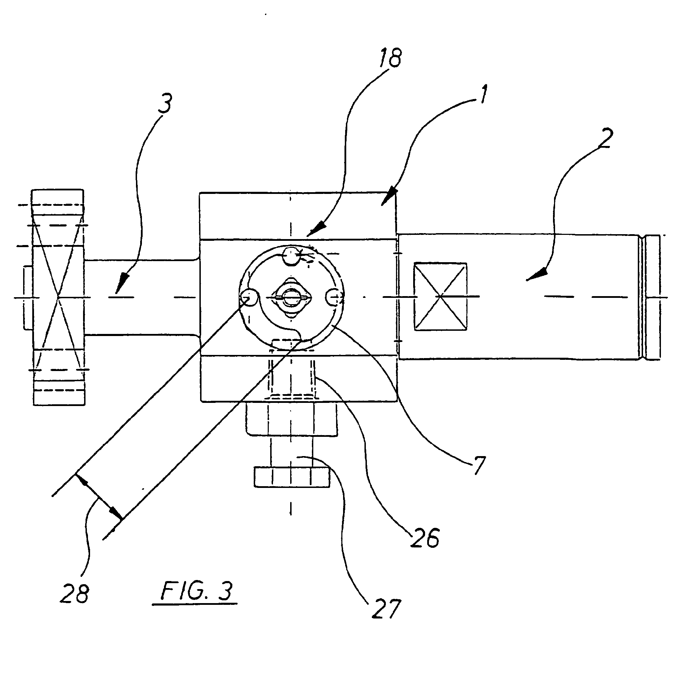

Ebenso ist der Entlastungs-/Entleerungsanschluss 26 mitsamt Nadelventil 27 auch aus der Fig. 3 ersichtlich, die eine schematische Draufsicht auf den Aufbau gemäß Fig. 1 zeigt, wobei in Fig. 3 zudem der Stellweg 28 der Kugel 7 schematisch dargestellt ist.

Wie dies der Fig. 1 weiter entnommen werden kann, wird bei der Montage nach dem Einsetzen der Kugel 7, der Schiebehülsen 14, 15 in Verbindung mit den Dichtungspackungen 19, 20, der O-Ring-Dichtungen 16, 17 und der Tellerfedern 23, 24 der Prozessleitungs-Anschluss 2 in die Aufnahmeöffnung 5 eingeschraubt und mittels einer O-Ring-Dichtung 29 abgedichtet. Alternativ dazu kann der Prozessleitungs-Anschluss 2 aber auch eingeschweißt werden.

Die Funktionsweise des Aufbaus wird ebenfalls anhand der Fig. 1 bis 3 näher erläutert:

Durch das Absperren des Kugelhahns 18 durch Verdrehen der Kugel 7 aus der Durchgangsposition 6 in ihre hier nicht dargestellte Absperrposition wird eine "double-block"-Funktion bezüglich der prozessleitungsseitigen und des messgeräteseitigen Hochdrucks hergestellt. Anschließend kann in einem zweiten Verfahrensschritt das als Nadelventil ausgebildete Entlastungs-/Entleerungsventil 27 zumindest teilweise geöffnet werden, wodurch einerseits eine Dichtheitsprüfung der beiden Kugelsitze 12, 13 und andererseits eine Entlastung des Kugelraums 25 erfolgt. Wenn die Kugelsitze 12, 13 dicht sind, erfolgt allenfalls nur ein kurzes Entweichen von Medium. Bei einem gasförmigen Medium kann dies beispielweise durch ein nur kurzes Zischen festgestellt werden. Damit wird eine einfache und kostengünstige sowie raumsparende Anordnung mit einer "double-block and bleed"-Funktion in Verbindung mit einer sicheren Entkopplung des Messgerät-Anschlusses 3 von der Hochdruck-Prozessleitung ermöglicht. Anschließend kann dann in einem weiteren Verfahrensschritt das hier nicht dargestellte Messgerät, z. B. ein Drucktransmitter, ohne Sicherheitsrisiko abgebaut werden.

## Patentansprüche

1. Messgeräteinstallation mit einer mit einem unter Hochdruck stehenden Medium beaufschlagbaren Prozessleitung, und mit einem Absperrorgan zwischen dem Messgerät und der Prozessleitung,
wobei das Absperrorgan ein Kugelhahn (18) ist, mit:
- einem Ventilkörper als Kugelgehäuse (1) mit einem Prozessleitungs-Anschluss (2) und einem Messgerät-Anschluss (3),
- einer zwischen einer Durchgangsposition (6) und einer Absperrposition verdrehbaren Kugel (7) im Kugelgehäuse (1), die eine in die Durchgangsposition (6) stellbare Durchgangsbohrung (8) enthält,
- zwei jeweils in Richtung des Prozessleitungs-Anschlusses (2) und des Messgerät-Anschlusses (3) liegenden Kugelsitzen (12, 13), **dadurch gekennzeichnet dass** die Kugelsitze je eine auf die Kugel (7) federvorgespannte und abgedichtet verschiebbare Schiebehülse (14, 15) aufweisen mit einer an der Kugel (7) ringförmig anliegenden Dichtungspackung (19, 20), wodurch zwischen den Dichtungspackungen (19, 20) ein gegenüber dem Prozessleitungs-Anschluss (2) und dem Messgerät-Anschluss (3) nicht unmittelbar abgedichteter Kugelraum (25) gebildet ist,
wobei das Kugelgehäuse (1) im Bereich des Kugelraums (25) einen Entlastungs-/Entleerungsanschluss (26) mit einem angeschlossenen betätigbaren Entlastungs-/Entleerungsventil (27) aufweist.

2. Messgeräteinstallation nach Anspruch 1, **dadurch gekennzeichnet,**
**dass** der Entlastungs-/Entleerungsanschluss am Kugelraum (25) als Gewindebohrung (26) ausgebildet ist, und
**dass** dort das betätigbare Entlastungs-/Entleerungsventil als Nadelventil (27) eingesetzt ist.

3. Messgeräteinstallation nach Anspruch 1 oder 2, **dadurch gekennzeichnet, dass** die Abdichtung der Schiebehülsen (14, 15) jeweils durch wenigstens einen O-Ring (16, 17) zwischen der Schiebehülse (14, 15) und der zugeordneten Schiebeführung durchgeführt ist.

4. Messgeräteinstallation nach einem der Ansprüche 1 bis 3, **dadurch gekennzeichnet, dass** die Federvorspannung der Schiebehülse (14, 15) jeweils durch wenigstens eine Tellerfeder (23, 24) durchgeführt ist.

5. Messgeräteinstallation nach einem der Ansprüche 1 bis 4, **dadurch gekennzeichnet, dass** der Prozessleitungs-Anschluss (2) und der Messgerät-Anschluss (3) gegenüberliegend und um 90° versetzt zur Kugeldrehachse angeordnet sind und die Kugel (7) mit einer geraden Durchgangsbohrung (8) versehen ist.

6. Messgeräteinstallation nach einem der Ansprüche 1 bis 5, **dadurch gekennzeichnet, dass** die Verdrehung der Kugel (7) mittels eines Vierkants (9) durchführbar ist der mit einem dicht in den Kugelraum (25) geführten Wellenende (10) in eine Ausnehmung (11) der Kugel (7) drehbewegungsübertragend eingreift.

7. Messgeräteinstallation nach einem der Ansprüche 1 bis 6, **dadurch gekennzeichnet,**
**dass** der Ventilkörper einen einseitig offenen Kugelaufnahmeraum (4) mit einer Aufnahmeöffnung (5) aufweist, an den sich gegenüber der Aufnahmeöffnung (5) einstückig ein Anschlussstutzen (3), insbesondere als Messgerät-Anschluss anschließt, wobei der Anschlussstutzen (3) einen kleineren Durchmesser als die Aufnahmeöffnung (5) aufweist, und
**dass** in die Aufnahmeöffnung (5) nach einem Einbau der Kugel (7), der Schiebehülsen (14, 15), der Dichtungen (16, 17, 19, 20) und der Federn (23, 24) als weiteres Bauteil ein zweiter Anschlussstutzen (3) dicht eingesetzt, vorzugsweise eingeschraubt oder eingeschweißt ist.

## Claims

1. Measuring installation with a process pipeline that is under high pressure and to which medium can be admitted, and with a shut-off member between the measuring instrument and the process pipeline,
the shut-off member being a ball cock (18), with:
- a valve body as a ball casing (1) with a process pipeline connection (2) and a measuring instrument connection (3),
- a ball (7) in the ball casing (1), which ball can be turned between a passing-through position (6) and a shutting-off position and contains a passing-through bore (8) which can be set into the passing-through position (6),
- two ball seats (12, 13), respectively lying in the direction of the process pipeline connection (2) and the measuring instrument connection (3), **characterized in that** the ball seats each have a sliding sleeve (14, 15) which is spring-biased and displaceable in a sealed manner with respect to the ball (7), with a sealing packing (19, 20) lying in an annular manner against the ball (7), thereby forming between the sealing packings (19, 20) a ball space (25) which is not directly sealed off with respect to the process pipeline connection (2) and the measuring instrument connection (3),
the ball casing (1) having in the region of the ball space (25) a relieving/draining connection (26) with a connected actuable relieving/draining valve (27).

2. Measuring installation according to Claim 1, **characterized in that** the relieving/draining connection at the ball space (25) is formed as a threaded bore (26), and **in that** the actuable relieving/draining valve is fitted there as a needle valve (27).

3. Measuring installation according to Claim 1 or 2, **characterized in that** the sealing of the sliding sleeves (14, 15) is respectively carried out by at least one O-ring (16, 17) between the sliding sleeve (14, 15) and the assigned sliding guide.

4. Measuring installation according to one of Claims 1 to 3, **characterized in that** the spring biasing of the sliding sleeve (14, 15) is respectively carried out by at least one cup spring (23, 24).

5. Measuring installation according to one of Claims 1 to 4, **characterized in that** the process pipeline connection (2) and the measuring instrument connection (3) are arranged lying opposite and offset by 90° in relation to the rotational axis of the ball, and the ball (7) is provided with a straight passing-through bore (8).

6. Measuring installation according to one of Claims 1 to 5, **characterized in that** the rotation of the ball (7) can be carried out by means of a square (9), which engages with a shaft end (10) that is led into the ball space (25) in a sealed manner in a recess (11) of the ball (7) in such a way as to transmit the rotating movement.

7. Measuring installation according to one of Claims 1 to 6, **characterized in that** the valve body has a ball receiving space (4), which is open on one side and has a receiving opening (5) which is integrally adjoined opposite the receiving opening (5) by a connecting piece (3), in particular as a measuring instrument connection, the connecting piece (3) having a smaller diameter than the receiving opening (5), and **in that**, after fitting the ball (7), the sliding sleeves (14, 15), the seals (16, 17, 19, 20) and the springs (23, 24), a second connecting piece (3) is fitted, preferably screwed or welded, in a sealed manner into the receiving opening (5) as a further component.

## Revendications

1. Dispositif de mesure avec une conduite de procédé pouvant être alimentée par un fluide à haute pression et avec un organe d'arrêt entre l'appareil de mesure et la conduite de procédé,
l'organe d'arrêt étant un robinet à boisseau sphérique (18), avec
un corps de soupape sous forme de boîtier à bille (1) avec un raccord de conduite de procédé (2) et un raccord d'appareil de mesure (3)
une bille (7) pouvant être tournée entre une position de passage (6) et une position d'arrêt dans le boîtier à bille (1) qui comprend un alésage de passage (8) réglable dans la position de passage (6),
deux logements de billes (12, 13) se trouvant respectivement dans la direction du raccord de conduite de procédé (2) et du raccord d'appareil de mesure (3),
**caractérisé en ce que** les logements de billes présentent chacun un manchon coulissant (14, 15) mobile de manière étanche et précontraint par ressort sur la bille (7) avec un joint d'étanchéité (19, 20) de forme annulaire placé sur la bille (7), ce par quoi entre les joints d'étanchéité (19, 20), un espace de bille (25) étanchéifié de manière indirecte est formé par rapport au raccord de conduite de procédé (2) et au raccord d'appareil de mesure (3),
le boîtier à bille (1) au niveau de l'espace de bille (25) présentant un raccord de sûreté/évacuation (26) avec une soupape de sûreté/évacuation (27) actionnable raccordée.

2. Dispositif de mesure selon la revendication 1, **caractérisé en ce**
**que** le raccord de décharge/évacuation est formé sous forme d'alésage fileté (26) sur l'espace de bille (25) et
en ce qu'à cet endroit la soupape de sûreté/évacuation (27) actionnable est implantée sous forme de soupape à pointeau.

3. Dispositif de mesure selon la revendication 1 ou 2, **caractérisé en ce que** l'étanchéité des manchons coulissants (14, 15) est réalisée respectivement par au moins un joint torique (16, 17) entre le manchon coulissant (14, 15) et la coulisse correspondante.

4. Dispositif de mesure selon l'une quelconque des revendications 1 à 3, **caractérisé en ce que** la précontrainte par ressort du manchon coulissant (14, 15) est réalisée respectivement par au moins une rondelle-ressort (23, 24).

5. Dispositif de mesure selon l'une quelconque des revendications 1 à 4, **caractérisé en ce que** le raccord de conduite de procédé (2) et le raccord d'appareil de mesure (3) sont placés de manière opposée l'un à l'autre et décalés de 90° par rapport à l'axe de rotation de la bille et la bille (7) est munie d'un alésage de passage (8) droit.

6. Dispositif de mesure selon l'une quelconque des revendications 1 à 5, **caractérisé en ce que** la rotation de la bille (7) est réalisable au moyen d'un quatre-pans (9) qui engage une extrémité d'arbre (10) amenée de manière étanche dans l'espace pour bille (25), dans un évidement (11) de la bille (7) en transférant le mouvement de rotation.

7. Dispositif de mesure selon l'une quelconque des revendications 1 à 6, **caractérisé en ce**
**que** le corps de soupape présente un espace de réception de bille (4) ouvrant sur un côté avec une ouverture de réception (5) sur lequel un tuyau de raccord (3) en particulier en tant que raccord d'appareil de mesure, se raccorde de manière monobloc par rapport à l'ouverture de réception (5), moyennant quoi le tuyau de raccord (3) présente un diamètre inférieur à l'ouverture de réception (5),
et en ce que, dans l'ouverture de réception (5), après une intégration de la bille (7), des manchons coulissants (14, 15), des joints (16, 17, 19, 20) et des ressorts (23, 24) en tant qu'autre composant, un deuxième tuyau de raccord (3) est placé de manière étanche, de préférence vissé ou soudé.
